# FASCICULE DE BREVET EUROPEEN

(11) **EP 1 117 318 B1**
(45) Date de publication et mention de la délivrance du brevet: **13.08.2003**
(21) Numéro de dépôt: 99970006.5
(22) Date de dépôt: 01.10.1999
(51) Int. Cl.: A47J 27/21

(54) **APPAREIL ELECTRIQUE POUR CHAUFFER LES LIQUIDES, COMPORTANT UN FOND CHAUFFANT ET DES PAROIS EN VERRE**
ELEKTROGERÄT ZUM ERHITZEN VON FLÜSSIGKEITEN MIT EINEM HEIZBODEN UND GLASWÄNDEN
ELECTRICAL APPLIANCE FOR HEATING LIQUIDS, COMPRISING A HEATING BASE AND GLASS WALLS

(30) Priorité: 01.10.1998 FR 9812512
(43) Date de publication de la demande: 25.07.2001
(73) Titulaire: SEB S.A., 69130 Ecully (FR)
(72) Inventeur: DOMINGUEZ, Augustin, F-65000 Tarbes (FR)
(74) Mandataire: Kiehl, Hubert
(86) Numéro de dépôt international: FR9902334
(87) Numéro de publication internationale: WO00019872

(56) Documents cités:
- EP-A- 0 574 310
- DE-U- 6 906 348
- FR-A- 2 351 376
- FR-A- 2 750 311

## Description

La présente invention se rapporte au domaine technique général des appareils électroménagers destinés à chauffer un liquide et concerne plus particulièrement les appareils comportant des parois latérales en verre et un fond rapporté sous lequel est disposé un élément chauffant.

Il est connu de réaliser un récipient du type précité dans lequel les parois latérales et le fond sont assemblés par collage au moyen d'un joint silicone. Le fond présente une gorge annulaire remplie de silicone, dans laquelle est rapportée la partie inférieure d'un tube en verre formant les parois latérales. L'élément chauffant fixé sous le fond est un élément chauffant blindé. Des essais ont montré qu'une telle construction n'est pas suffisamment fiable, des fuites pouvant se produire au niveau du joint. Une telle situation présente des risques car le liquide peut alors atteindre les parties électriques disposées sous le fond chauffant.

Il est connu un appareil électrique à infuser dont le récipient comprend un fond chauffant sur lequel sont montées des parois latérales en verre. Le document FR 2 750 311 se rapportant à cet appareil décrit la construction de ce récipient. Un joint d'étanchéité circulaire de section transversale en forme de U est placé autour d'une ouverture du fond du récipient. La partie supérieure d'un élément chauffant obture l'ouverture du fond du récipient. Une base vient en appui sous le fond du récipient. Une tôle solidaire de la base est fixée à l'élément chauffant. Une telle construction est durable mais présente toutefois l'inconvénient de laisser peu de place pour l'élément chauffant. En effet, une collerette de l'élément chauffant vient en appui à l'intérieur du récipient par l'intermédiaire du joint d'étanchéité sur un épaulement intérieur formé à la base des parois latérales du récipient.

L'objet de la présente invention est de remédier aux inconvénients précités et de proposer un appareil électroménager destiné à chauffer des liquides comportant des parois latérales réalisées en un matériau fragile à faible limite élastique et un fond chauffant rapporté, dont la construction présente une grande fiabilité sans pour autant réduire la taille du fond chauffant.

Un autre objet de la présente invention est de proposer un appareil du type précité dont l'assemblage soit simplifié.

Un autre objet de la présente invention est de proposer un appareil du type précité dont l'assemblage soit démontable.

Un autre objet de la présente invention est de proposer un appareil du type précité particulièrement compact.

Un autre objet de la présente invention est de proposer un appareil du type précité dont le nettoyage soit facilité.

Les objets assignés à l'invention sont atteints avec un appareil électroménager destiné à chauffer des liquides, comportant un récipient comprenant un fond chauffant, des parois latérales en verre, montées sur le fond, un joint d'étanchéité disposé entre un rebord annulaire du fond et un épaulement ménagé sur la partie inférieure des parois latérales, ainsi que des moyens de maintien prévus pour le serrage du joint entre le rebord annulaire et l'épaulement, du fait que l'épaulement est extérieur et est prolongé en sa périphérie extérieure par une partie tubulaire inférieure.

Cette construction mettant en compression un joint entre le fond chauffant et un épaulement des parois latérales présente une bonne fiabilité. Le joint n'assure pas la tenue de la liaison mécanique entre les parois latérales et le fond chauffant. De plus cette construction est d'un assemblage simple.

Avec l'épaulement extérieur, l'assemblage permet de dégager de la place sous le fond chauffant. La partie tubulaire inférieure prolongeant l'épaulement permet de simplifier le façonnage des parois latérales du récipient réalisées en verre, et de répartir les contraintes exercées par les moyens de serrage sur l'épaulement et la partie tubulaire, tout en rigidifiant ledit épaulement.

Avantageusement les moyens de maintien sont formés par une bague annulaire assemblée avec une entretoise, la bague venant en appui direct ou indirect sur l'épaulement du côté opposé au joint, l'entretoise venant en appui direct ou indirect sur la face inférieure du fond repoussant le fond vers l'épaulement en comprimant le joint. Une telle construction est d'un assemblage simple et peut être démontable, ce qui permet de faciliter la maintenance du produit ainsi que son recyclage.

Avantageusement l'entretoise est assemblée avec la bague par clipsage. Une telle disposition permet de simplifier encore l'assemblage de l'appareil. En alternative, l'entretoise peut être assemblée avec la bague notamment par vissage.

Avantageusement la paroi du fond chauffant susceptible d'être en contact avec les liquides est en inox. L'inox étant moins sensible que d'autres matières telles que l'aluminium à l'accrochage du tartre, cette disposition permet d'améliorer le nettoyage de l'appareil.

Selon un mode de réalisation, le fond chauffant comporte des moyens de chauffe électriques.

Avantageusement alors les moyens de chauffe électriques sont formés par un élément chauffant plat. Cette disposition permet de bénéficier d'une chauffe homogène et rapide grâce à la répartition de l'élément chauffant sur une majeure partie de la surface du fond et à des puissances nominales élevées. De plus l'élément chauffant plat transmet la chaleur par conduction au fond sur lequel il est fixé et rayonne de manière très modérée sur la face opposée à la face fixée sur ledit fond. La présence d'un réflecteur n'est donc pas nécessaire. Cette caractéristique, associée à la faible hauteur de l'élément chauffant plat, permet d'améliorer la compacité de l'appareil.

Avantageusement encore, l'appareil comporte un socle amovible muni d'un connecteur électrique femelle prévu pour coopérer avec un connecteur électrique mâle associé aux moyens de chauffe électriques, cette disposition permettant de faciliter l'utilisation de l'appareil.

Selon un autre mode de réalisation, le fond chauffant est formé par une coupelle en inox échauffable par induction.

L'appareil peut comporter un capot annulaire entourant la base des parois latérales et venant en appui direct ou indirect sur l'épaulement. Ce capot peut être formé par la bague coopérant avec l'entretoise ou par une pièce indépendante. Ce capot peut être assemblé sur un boîtier inférieur permettant de loger les moyens de chauffe et de régulation. Un joint d'étanchéité supérieur peut être monté entre le capot et les parois latérales pour s'affranchir des irrégularités géométriques des parois latérales. Une encoche peut être prévue dans le capot pour le passage d'un bec verseur des parois latérales lors de l'assemblage du capot. Une poignée peut être prévue pour fermer l'encoche du capot.

L'invention sera mieux comprise à l'étude d'exemples de réalisation pris à titre nullement limitatifs et illustrés dans les figures annexées dans lesquelles :
- la figure 1 est une vue latérale en coupe avant assemblage d'un exemple de réalisation d'un appareil selon l'invention comportant un fond chauffant associé à des moyens de chauffe électriques,
- la figure 2 est une vue latérale en coupe de l'appareil de la figure 1 après assemblage.
- la figure 3 est une vue partielle en coupe d'une variante de réalisation de l'appareil présenté aux figures 1 et 2
- la figure 4 est une vue partielle en coupe d'un autre exemple de réalisation variante de réalisation d'un appareil selon l'invention.
- la figure 5 est une vue partielle en coupe d'une variante de réalisation de l'appareil présenté à la figure 3, comportant un autre type de fond chauffant.

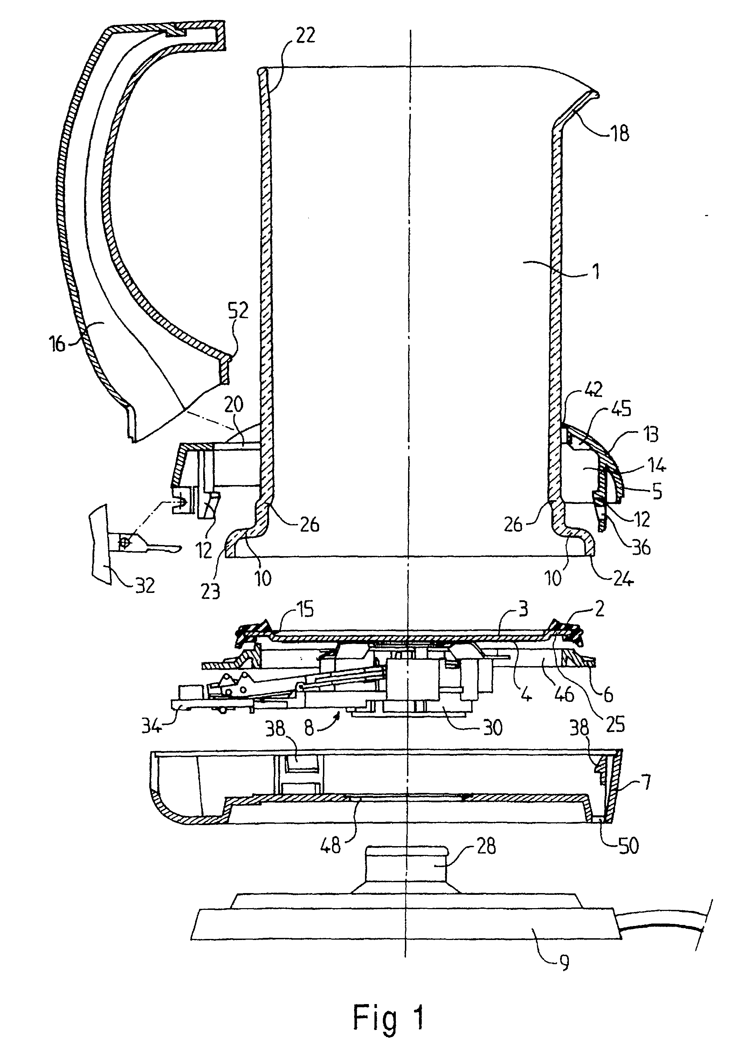

La figure 1 montre les éléments d'un appareil électroménager destiné à chauffer les liquides tel qu'une bouilloire ou encore une cafetière piston.

L'appareil comporte des parois latérales formées par un tube 1 en verre et un fond 3 chauffant. Le tube 1 peut être réalisé en tout type de verre susceptible de résister aux températures de la boisson préparée, soit environ au moins 100°C, et aux éventuels choc thermiques lors d'un remplissage du récipient encore chaud par de l'eau froide. Par tout type de verre il convient de comprendre également les vitrocéramiques.

Le tube 1 présente une partie supérieure 22 légèrement évasée avec un bec 18 ainsi qu'un épaulement 10 dans sa partie inférieure. L'épaulement 10 est sensiblement plat. Un deuxième épaulement 26 est ménagé au dessus de l'épaulement 10. La base 24 du tube 1 est rebrûlée ou rodée pour éviter les amorces de rupture. Tel que bien visible à la figure 1, l'épaulement 10 est extérieur et est prolongé en sa périphérie extérieure par une partie tubulaire inférieure 23.

Le fond 3 est formé par une plaque en inox sur la périphérie de laquelle est rapporté un joint d'étanchéité 2 en silicone moulé. La face supérieure du fond 3 présente un léger embouti 15. Tel que bien visible à la figure 1, le joint 2 est rapporté sur un rebord annulaire 25 du fond 3.

Un élément chauffant plat 4 est disposé sur la face inférieure du fond 3. L'élément chauffant plat 4 est associé à un dispositif de régulation 8 comprenant un interrupteur 34, et est alimenté au moyen d'un connecteur électrique mâle 30. L'interrupteur 34 est manoeuvré au moyen d'un bouton 32.

Une entretoise 6 comporte un passage 46 prévu pour l'introduction du dispositif de régulation 8. Un capot 5 présente une ouverture 14 prévue pour le passage du tube 1. En d'autres termes le capot 5 est une pièce annulaire et forme une bague 13. L'ouverture 14 est délimitée par une bordure 42 prévue pour un appui sur le tube 1 entre l'épaulement 10 et le deuxième épaulement 26, et une encoche 20. La bordure 42 est déformable afin d'assurer une liaison avec la périphérie du tube 1 sans laisser d'espace. Par appui sur le tube 1 entre l'épaulement 10 et le deuxième épaulement 26 il convient d'entendre également un appui sur l'épaulement 10 ou sur l'épaulement 26. La bordure 42 est de préférence déformable élastiquement. L'encoche 20 est prévue pour le passage du bec 18. Le capot 5 présente également des pattes de clipsage 12 prévues pour retenir l'entretoise 6 et des nervures 45 prévues pour un appui sur l'épaulement 10. De préférence le capot 5 comporte au moins trois nervures 45. Les pattes de clipsage 12 et les nervures 45 sont des éléments de la bague 13 coopérant avec l'entretoise 6 pour maintenir assemblé le fond 3 sur l'épaulement 10 en comprimant le joint 2.

Un boîtier 7 est prévu pour fermer la partie inférieure du capot 5. Le boîtier comporte des crochets de clipsage 38 prévus pour s'engager par l'extérieur dans une découpe 36 des pattes de clipsage 12 issues du capot 5. Une fente 50 permet d'accéder aux pattes de clipsage 38 en vue d'un démontage. Le boîtier 7 présente dans sa partie inférieure un trou 48 prévu pour s'ajuster en face du connecteur électrique mâle 30.

Un socle 9 d'alimentation électrique comporte un connecteur électrique femelle 28 prévu pour coopérer avec le connecteur électrique mâle 30.

Une poignée 16 est prévue pour un montage sur le capot 5. La poignée 16 comporte une languette 52 prévue pour coopérer avec le tube 1 d'une manière similaire à la bordure 42 du capot 5.

L'assemblage des éléments de l'appareil présenté à la figure 1 s'effectue de la manière suivante.

Le fond 3 sous lequel sont disposés l'élément chauffant plat 4 et le dispositif de régulation 8, et à la périphérie duquel est monté le joint d'étanchéité 2, est disposé dans la partie inférieure du tube 1 contre l'épaulement 10. Le capot 5 est introduit autour du tube 1. L'encoche 20 est disposée du côté opposé au bec 18. Les nervures 45 du capot 5 sont amenées en contact avec le dessus de l'épaulement 10. L'entretoise 6 est introduite autour du dispositif de régulation 8 et est clipsée dans le capot 5. La poignée 16 est montée sur le socle 5. Le boîtier 7 est assemblé par clipsage avec le capot 5.

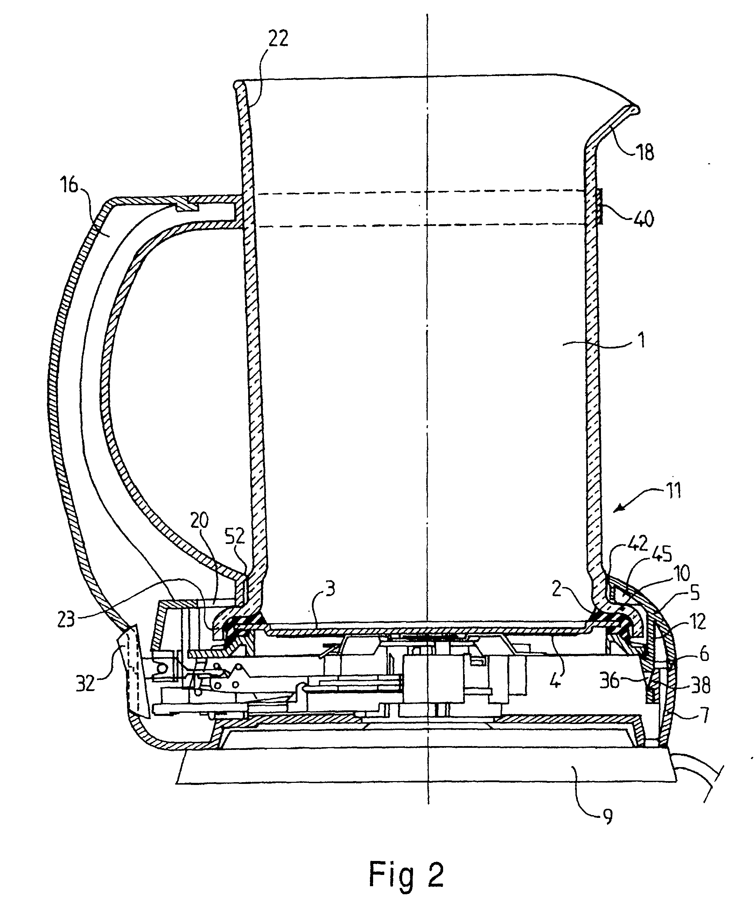

L'appareil assemblé présenté à la figure 2 forme un récipient chauffant 11 sur le socle 9. Le joint d'étanchéité 2 est maintenu en compression entre l'épaulement 10 du tube 1 et le fond 3 par l'intermédiaire de l'entretoise 6 tenue par les pattes de clipsage 12 du capot 5. Les nervures 45 du capot 5 sont plaquées sur l'épaulement 10. Le capot 5 prend appui de manière annulaire sur l'épaulement 10. La poignée 16 montée sur le capot 5 cache l'encoche 20.

Un cerclage métallique 40 autour du tube 1 assure la tenue de la partie supérieure de la poignée 16. La bordure 42 et la languette 52 sont plaquées contre le tube 1. Les crochets de clipsage 38 insérés dans les découpes 36 des pattes de clipsage 12 du capot 5 maintiennent le boîtier 7.

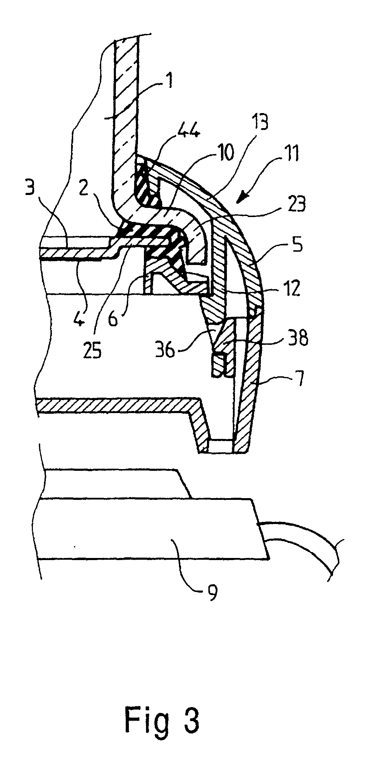

La figure 3 présente une variante de réalisation de l'exemple précédent dans lequel le deuxième épaulement 26 a été supprimé et remplacé par un joint d'étanchéité supérieur 44 disposé entre le capot 5 et le tube 1 au dessus de l'épaulement 10.

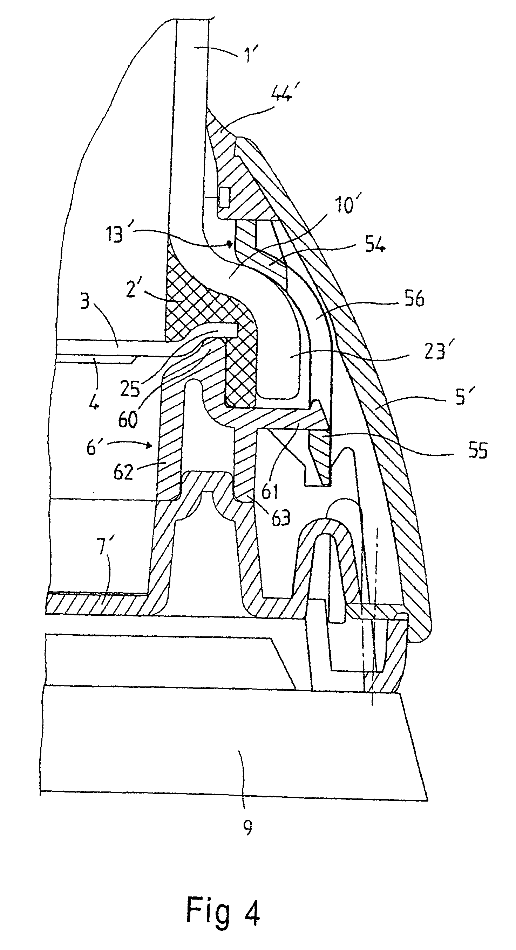

La figure 4 présente un exemple de réalisation dérivé de la variante précédente, dans lequel le capot 5' et la bague 13' sont constitués de deux pièces différentes. L'épaulement 10' n'est pas perpendiculaire à la paroi latérale du tube 1', mais est légèrement incliné vers le bas. La bague 13' comporte une couronne supérieure 54 venant en appui sur l'épaulement 10'. Le joint 2' est monté sous l'épaulement 10' à l'intérieur de la partie tubulaire inférieure 23' du tube 1'. La bague 13' comporte sur son pourtour inférieur une série de pattes longitudinales 55 comportant chacune une ouverture 56 dans laquelle vient s'insérer une patte radiale 61 de l'entretoise 6'. Ainsi l'entretoise 6' peut être clipsée avec la bague 13'.

La face supérieure de l'entretoise 6' forme une nervure annulaire 60 dont le sommet vient directement en appui sur la face inférieure du rebord annulaire 25' du fond 3. La face externe de la nervure 60 vient en contact avec la partie du joint 2' montée contre la partie tubulaire 23'. Sur sa face inférieure l'entretoise 6' comporte deux couronnes concentriques 62, 63 venant en appui sur une conformation annulaire du boîtier 7'.

La bague 13' en contact avec le tube 1' pouvant contenir du liquide chaud et l'entretoise 6' en contact avec le fond 3 équipé d'un élément chauffant plat 4 peuvent être réalisées en matière plastique technique présentant de bonnes propriétés mécaniques aux températures rencontrées, tel que le PBTP ou le polyamide renforcé de fibres de verre.

Le capot 5' et le boîtier 7' assurant un habillage et non une fonction de maintien du fond 3 chauffant avec le tube 1' peuvent être réalisées en matière présentant de moins bonnes propriétés thermiques et/ou mécaniques.

Le joint 44' est surmoulé à l'intérieur du bord supérieur du capot 5'. Lorsque le capot 5' est en place, le joint 44' vient en appui d'une part contre les parois latérales du tube 1' et d'autre part en sa partie inférieure sur le sommet de la bague 13'.

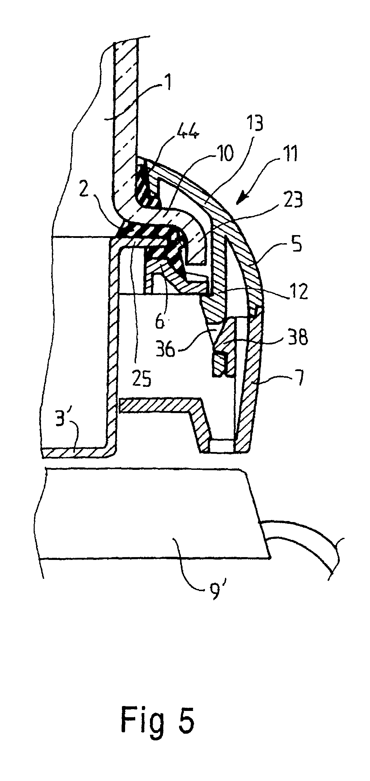

La figure 5 présente un exemple de réalisation dérivé de la variante représentée à la figure 3, dans lequel le fond chauffant associé un élément chauffant électrique a été remplacé par un fond chauffant 3' réalisé en un matériau échauffable par induction, tel qu'un inox ferritique. Le fond chauffant 3' est formé par une coupelle présentant un fond embouti émergeant d'une ouverture ménagée dans la base du boîtier 7. La coupelle peut être posée sur un socle 9' comportant un foyer de chauffe par induction.

De nombreuses améliorations peuvent être apportées à cet appareil dans le cadre des revendications.

La bague peut prendre appui directement ou indirectement sur l'épaulement. Les parois latérales peuvent être de géométrie polygonale au lieu d'être de géométrie de révolution. Les parois latérales peuvent être bombées au lieu d'être tubulaires. La bague doit alors être associée à une ou plusieurs pièces intermédiaires pour assurer l'appui sur l'épaulement, si le diamètre de l'épaulement est inférieur à celui des parois latérales. Les pattes ou les crochets de clipsage peuvent être remplacés par un assemblage mécanique par vis. Le joint d'étanchéité peut être simplement disposé entre le fond et l'épaulement au lieu d'être monté autour de la périphérie du fond. D'autres matériaux que le silicone peuvent être envisagés pour le joint. D'autres procédés d'obtention que le moulage peuvent être envisagés pour le joint. D'autres matériaux que l'inox peuvent être envisagés pour le fond.

Dans la version comportant un élément chauffant électrique, l'alimentation électrique peut être directement reliée au boîtier. L'élément chauffant plat peut être remplacé par un élément chauffant blindé.

## Revendications

1. Appareil électroménager destiné à chauffer des liquides, comportant un récipient comprenant un fond (3 ; 3') chauffant, des parois latérales (1 ; 1') en verre, montées sur le fond (3 ; 3'), un joint d'étanchéité (2 ; 2') disposé entre un rebord annulaire (25 ; 25') du fond (3 ; 3') et un épaulement (10 ; 10') ménagé sur la partie inférieure des parois latérales (1 ; 1'), ainsi que des moyens de maintien (13, 6 ; 13', 6') prévus pour le serrage du joint (2 ; 2') entre le rebord annulaire (25 ; 25') et l'épaulement (10 ; 10'), **caractérisé en ce que** l'épaulement (10 ; 10') s'étend à partir de la partie inférieure des parois latérales vers l'extérieur du récipient et est prolongé en sa périphérie extérieure par une partie tubulaire inférieure (23 ; 23').

2. Appareil selon la revendication 1 **caractérisé en ce que** les moyens de maintien sont formés par une bague annulaire (13 ; 13') assemblée avec une entretoise (6 ; 6'), la bague (13 ; 13') venant en appui direct ou indirect sur l'épaulement (10 ; 10') du côté opposé au joint (2 ; 2'), l'entretoise (6 ; 6') venant en appui direct ou indirect sur la face inférieure du fond (3 ; 3') repoussant le fond (3 ; 3') vers l'épaulement (10 ; 10') en comprimant le joint (2 ; 2').

3. Appareil selon la revendication 2 **caractérisé en ce que** l'entretoise (6 ; 6') est assemblée avec la bague (13 ; 13') par clipsage (12 ; 61).

4. Appareil selon l'une des revendications 1 à 3 **caractérisé en ce que** la paroi du fond (3 ; 3') chauffant susceptible d'être en contact avec les liquides est en inox.

5. Appareil selon l'une des revendications 1 à 4 **caractérisé en ce que** le fond (3) chauffant comporte des moyens de chauffe électriques (4).

6. Appareil selon la revendication 5 **caractérisé en ce que** les moyens de chauffe électriques (4) sont formés par un élément chauffant plat.

7. Appareil selon l'une des revendications 5 ou 6 **caractérisé en ce qu'**il comporte un socle amovible (9) muni d'un connecteur électique femelle (28) prévu pour coopérer avec un connecteur électrique mâle (30) associé aux moyens de chauffe électriques (4).

8. Appareil selon l'uns des revendications 1 à 4 **caractérisé en ce que** le fond (3') chauffant est formé par une coupelle en inox échauffable par induction.

9. Appareil selon l'une des revendications 1 à 8 **caractérisé en ce qu'**il comporte un capot annulaire (5 ; 5') entourant la base des parois latérales (1 ; 1') et venant en appui direct ou indirect sur l'épaulement (10 ; 10').

10. Appareil selon la revendication 9, **caractérisé en ce que** le capot (5 ; 5') est assemblé sur un boîtier (7).

11. Appareil selon l'une des revendications 9 ou 10, **caractérisé en ce qu'**un joint d'étanchéité supérieur (44 ; 44') est monté entre le capot (5 ; 5') et les parois latérales (1 ; 1').

12. Appareil selon l'une des revendications 9 à 11, **caractérisé en ce que** les parois latérales (1) présentent un bec verseur (18) et **en ce que** le capot (5) présente une encoche (20) prévue pour le passage du bec verseur (18).

13. Appareil selon la revendication 12, **caractérisé en ce qu'**il comporte une poignée (18) fermant l'encoche (20).

14. Récipient destiné à chauffer des liquides, comprenant un fond (3') chauffant, des parois latérales (1') en verre, montées sur le fond (3'), un joint d'étanchéité (2') disposé entre un rebord annulaire (25') du fond (3') et un épaulement (10') ménagé sur la partie inférieure des parois latérales (1'), ainsi que des moyens de maintien (13', 6') prévus pour le serrage du joint (2') entre le rebord annulaire (25') et l'épaulement (10'), **caractérisé en ce que** l'épaulement (10') s'étend à partir de la partie inférieure des parois latérales vers l'extérieur du récipient et est prolongé en sa périphérie extérieure par une partie tubulaire inférieure (23') et **en ce que** le fond (3') chauffant est réalisé en un matériau échauffable par induction.

## Patentansprüche

1. Elektrohaushaltsgerät zum Erhitzen von Flüssigkeiten, enthaltend ein Gefäß mit einem Heizboden (3; 3'), am Boden (3; 3') angebrachte Seitenwände (1; 1') aus Glas, eine zwischen einem ringförmigen Rand (25; 25') des Bodens (3; 3') und einer am unteren Teil der Seitenwände (1; 1') ausgebildeten Schulter (10; 10') angeordnete Dichtung (2; 2') sowie Haltemittel (13, 6; 13'; 6') zum Einklemmen der Dichtung (2; 2') zwischen ringförmigem Rand (25; 25') und Schulter (10; 10'), **dadurch gekennzeichnet, dass** die Schulter (10; 10') sich ausgehend vom unteren Teil der Seitenwände nach außerhalb des Gefäßes erstreckt und an ihrem Außenumfang über einen unteren rohrförmigen Abschnitt (23; 23') erweitert ist.

2. Gerät nach Anspruch 1, **dadurch gekennzeichnet, dass** die Haltemittel aus einem ringförmigen Kranz (13; 13') gebildet sind, der mit einem Steg (6; 6') zusammengefügt ist, wobei der Kranz (13; 13') sich auf der der Dichtung (2; 2') gegenüberliegenden Seite direkt oder indirekt an der Schulter (10; 10') abstützt, wobei der Steg (6; 6') sich direkt oder indirekt an der Unterseite des Bodens (3; 3') abstützt und dabei den Boden (3; 3') zur Schulter (10; 10') drückt, wobei er die Dichtung (2; 2') zusammendrückt.

3. Gerät nach Anspruch 2, **dadurch gekennzeichnet, dass** der Steg (6; 6') durch Einschnappen (12; 61) mit dem Kranz (13; 13') zusammengefügt ist.

4. Gerät nach einem der Ansprüche 1 bis 3, **dadurch gekennzeichnet, dass** die Wand des Heizbodens (3; 3'), die mit den Flüssigkeiten in Kontakt stehen kann, aus Inox besteht.

5. Gerät nach einem der Ansprüche 1 bis 4, **dadurch gekennzeichnet, dass** der Heizboden (3) elektrische Heizmittel (4) enthält.

6. Gerät nach Anspruch 5, **dadurch gekennzeichnet, dass** die elektrischen Heizmittel (4) aus einem flachen Heizelement gebildet sind.

7. Gerät nach Anspruch 5 oder 6, **dadurch gekennzeichnet, dass** es einen abnehmbaren Sockel (9) enthält, der mit einer elektrischen Steckbuchse (28) ausgestattet ist, die dazu vorgesehen ist, mit einem elektrischen Stecker (30) zusammenzuwirken, der den elektrischen Heizmitteln (4) zugeordnet ist.

8. Gerät nach einem der Ansprüche 1 bis 4, **dadurch gekennzeichnet, dass** der Heizboden (3') aus einer mittels Induktion heizbaren Inox-Schale gebildet ist.

9. Gerät nach einem der Ansprüche 1 bis 8, **dadurch gekennzeichnet, dass** es eine ringförmige Haube (5; 5') enthält, die die Basis der Seitenwände (1; 1') umgibt und sich direkt oder indirekt an der Schulter (10; 10') abstützt.

10. Gerät nach Anspruch 9, **dadurch gekennzeichnet, dass** die Haube (5; 5') an ein Gehäuse (7) angefügt ist.

11. Gerät nach Anspruch 9 oder 10, **dadurch gekennzeichnet, dass** eine obere Dichtung (44; 44') zwischen der Haube (5; 5') und den Seitenwänden (1; 1') angebracht ist.

12. Gerät nach einem der Ansprüche 9 bis 11, **dadurch gekennzeichnet, dass** die Seitenwände (1) eine Gießtülle (18) aufweisen und dass die Haube (5) eine zum Durchtritt der Gießtülle (18) vorgesehene Ausnehmung (20) aufweist.

13. Gerät nach Anspruch 12, **dadurch gekennzeichnet, dass** es einen die Ausnehmung (20) verschließenden Griff (18) enthält.

14. Gefäß zum Erhitzen von Flüssigkeiten, enthaltend einen Heizboden (3; 3'), am Boden (3') angebrachte Seitenwände (1') aus Glas, eine zwischen einem ringförmigen Rand (25') des Bodens (3') und einer am unteren Teil der Seitenwände (1') ausgebildeten Schulter (10') angeordnete Dichtung (2') sowie Haltemittel (13'; 6') zum Einklemmen der Dichtung (2') zwischen ringförmigem Rand (25') und Schulter (10'), **dadurch gekennzeichnet, dass** die Schulter (10') sich ausgehend vom unteren Teil der Seitenwände nach außerhalb des Gefäßes erstreckt und an ihrem Außenumfang über einen unteren rohrförmigen Abschnitt (23') erweitert ist und dass der Heizboden (3) aus einem mittels Induktion erhitzbaren Material gebildet ist.

## Claims

1. A household appliance designed to heat liquids, the appliance having a receptacle comprising a heater bottom (3; 3'), glass side walls (1; 1') mounted on the bottom (3; 3'), a gasket (2; 2') disposed between an annular rim (25; 25') of the bottom (3; 3') and a shoulder (10; 10') formed on the bottom portion of the side walls (1; 1'), and holding means (13, 6; 13', 6') provided for clamping the gasket (2; 2') between the annular rim (25; 25') and the shoulder (10; 10'), the appliance being **characterized in that** the shoulder (10; 10') extends outwardly from the bottom portion of the side walls and is extended at its outside periphery by a bottom tubular portion (23; 23').

2. An appliance according to claim 1, **characterized in that** the holding means are formed by an annular ring (13; 13') assembled to a spacer (6; 6'), the ring (13; 13') coming to bear directly or indirectly against the shoulder (10; 10') on its side remote from the gasket (2, 2'), the spacer (6; 6') coming to bear directly or indirectly against the bottom face of the bottom (3; 3'), pushing the bottom (3; 3') towards the shoulder (10; 10'), thereby compressing the gasket (2; 2').

3. An appliance according to claim 2, **characterized in that** the spacer (6; 6') is assembled to the ring (13; 13') by clipping (12, 61).

4. An appliance according to any one of claims 1 to 3, **characterized in that** the wall of the heater bottom (3; 3') suitable for being in contact with liquids is made of stainless steel.

5. An appliance according to any one of claims 1 to 4, **characterized in that** the heater bottom (3) includes electrical heater means (4).

6. An appliance according to claim 5, **characterized in that** the electrical heater means (4) are formed by a flat heater element.

7. An appliance according to claim 5 or claim 6, **characterized in that** it includes a removable stand (9) provided with a female electrical connector (28) provided to co-operate with a male electrical connector (30) associated with the electrical heater means (4).

8. An appliance according to any one of claims 1 to 4, **characterized in that** the heater bottom (3') is formed by a stainless steel suitable for heating by induction.

9. An appliance according to any one of claims 1 to 8, **characterized in that** it includes an annular cap (5; 5') surrounding the base of the side walls (1; 1') and coming to bear directly or indirectly against the shoulder (10; 10').

10. An appliance according to claim 9, **characterized in that** the cap (5; 5') is assembled on a housing (7).

11. An appliance according to claim 9 or claim 10, **characterized in that** a top gasket (44; 44') is mounted between the cap (5; 5') and the side walls (1; 1').

12. An appliance according to any one of claims 9 to 11, **characterized in that** the side walls (1) present a pouring spout (18), and **in that** the cap (5) presents a notch (20) through which the pouring spout can pass (18).

13. An appliance according to claim 12, **characterized in that** it includes a handle (18) closing the notch (20).

14. A receptacle designed to heat liquids, the receptacle comprising a heater bottom (3'), glass side walls (1') mounted on the bottom (3'), a gasket (2') disposed between an annular rim (25') of the bottom (3') and a shoulder (10') formed on the bottom portion of the side walls (1'), and holding means (13', 6') provided for clamping the gasket (2') between the annular rim (25') and the shoulder (10'), the receptacle being **characterized in that** the shoulder (10') extends outwardly from the bottom portion of the side walls and is extended at its outside periphery by a bottom tubular portion (23'), and **in that** the heater bottom (3') is made of a material suitable for heating by induction.
